(19) Europäisches Patentamt / European Patent Office / Office européen des brevets

(11) **EP 3 145 775 B1**

(12) **FASCICULE DE BREVET EUROPEEN**

(45) Date de publication et mention de la délivrance du brevet:
**29.06.2022  Bulletin 2022/26**

(21) Numéro de dépôt: **15726051.4**

(22) Date de dépôt: **20.05.2015**

(51) Classification Internationale des Brevets (IPC):
**B60W 30/14** *(2006.01)*

(52) Classification Coopérative des Brevets (CPC):
**B60W 30/143**

(86) Numéro de dépôt international:
**PCT/EP2015/061164**

(87) Numéro de publication internationale:
**WO 2015/177238 (26.11.2015 Gazette 2015/47)**

(54) **DISPOSITIF D'ASSISTANCE À LA GESTION DE LA CONSOMMATION ÉNERGÉTIQUE D'UN VÉHICULE, PROCÉDÉ, PROGRAMME ET VÉHICULE**

VORRICHTUNG ZUR UNTERSTÜTZUNG DER VERWALTUNG DES ENERGIEVERBRAUCHS EINES FAHRZEUGS, VERFAHREN, PROGRAMM UND FAHRZEUG

DEVICE FOR ASSISTING IN THE MANAGEMENT OF THE ENERGY CONSUMPTION OF A VEHICLE, METHOD, PROGRAM AND VEHICLE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité:  **22.05.2014  FR 1454621**

(43) Date de publication de la demande:
**29.03.2017  Bulletin 2017/13**

(73) Titulaire: **CENTRE NATIONAL D'ÉTUDES SPATIALES (C N E S)**
**75001 Paris (FR)**

(72) Inventeur: **ROUQUETTE, Sébastien**
**F-31320 Castanet-Tolosan (FR)**

(74) Mandataire: **Germain Maureau**
**12, rue Boileau**
**69006 Lyon (FR)**

(56) Documents cités:
**EP-A1- 2 476 597          EP-A2- 1 923 291**
**WO-A1-2009/106852      DE-A1-102010 054 077**
**DE-A1-102012 210 317    GB-A- 2 452 579**

**Description**

L'invention concerne un dispositif d'assistance à la gestion de la consommation énergétique d'un véhicule ainsi qu'un procédé d'assistance à la gestion de la consommation énergétique d'un véhicule, un programme d'assistance à la gestion de la consommation énergétique d'un véhicule et un véhicule comprenant un tel dispositif.

FR2952337 décrit un dispositif permettant de calculer l'autonomie d'un véhicule en fonction du profil d'un itinéraire ou des profils d'itinéraires possibles autour de la position d'un véhicule à moteur électrique.

Cependant, dans un tel dispositif seul le profil des routes est pris en compte, c'est-à-dire le type de route (autoroute, route nationale, route secondaire), et les dénivelés. Si ces facteurs ont bien une influence sur la consommation d'énergie d'un véhicule, ils ne sont pas suffisants pour calculer de manière fiable l'autonomie réelle d'un véhicule.

De plus, un tel dispositif permet à un utilisateur de paramétrer un mode de conduite « calme », « normal » ou « sportif » de façon générale, mais ne permet pas d'adapter le mode de conduite au type de voie ou d'environnement dans lequel le véhicule se trouve.

EP2476597 décrit un système adapté pour réduire la force de propulsion d'un véhicule en fonction de sa vitesse, d'une limitation de vitesse vers laquelle il se dirige et d'une carte comprenant les limitations de vitesses, pour notamment programmer sa progression en roue libre en vue d'une limitation de vitesse et réduire sa consommation d'énergie.

DE10210054077 décrit un procédé dans lequel des profils de vitesses sont récupérés pour donner des instructions à un conducteur ou à un pilote automatique en fonction d'un profil de vitesses optimisé prenant en compte la position et la vitesse du véhicule, permettant de limiter la consommation du véhicule.

DE 10212210317 décrit une méthode permettant de déterminer un profil de vitesse sur différents tronçons de route, en fonction de limitations de vitesse et d'une consommation prédéterminée d'énergie par un véhicule.

GB2452579 décrit un système de contrôle d'un véhicule permettant de changer l'état d'un véhicule entre un état propulsé et un état en roues libres. Un tel système permet d'économiser du carburant, notamment lorsqu'un GPS permet de détecter des pentes ou des intersections sur un tronçon à l'avant du véhicule.

EP1923291 décrit un procédé et un dispositif permettant de déterminer le point initial de roues libres d'un véhicule pour lui permettre d'économiser de l'énergie, à partir de sa position et de sa vitesse, ainsi que d'une carte routière.

WO2009/106852 décrit un procédé de contrôle du changement de vitesse d'un véhicule dans lequel un profil de changements de vitesse est déterminé en fonction de conditions de circulation.

L'invention vise donc à pallier ces inconvénients.

L'invention vise à proposer un dispositif permettant d'assister la gestion de la consommation d'énergie d'un véhicule.

L'invention vise à proposer un dispositif qui permet de limiter de façon significative l'énergie consommée par un véhicule.

L'invention vise également à proposer un tel dispositif qui permet de calculer l'énergie consommée ou l'autonomie d'un véhicule sur un itinéraire donné.

L'invention vise à proposer un tel dispositif qui permet de choisir un itinéraire en fonction de l'énergie consommée et de la durée du trajet.

L'invention vise en outre à proposer un tel dispositif qui permet de calculer de façon prédictive l'autonomie d'un véhicule même en l'absence d'itinéraire défini à l'avance.

L'invention vise aussi à proposer un procédé, un programme informatique et un véhicule présentant les mêmes avantages.

Dans tout le texte, on désigne par « véhicule » un véhicule terrestre, c'est-à-dire un véhicule susceptible de se déplacer de façon principale sur la surface de la Terre, et non un véhicule aérien. Un véhicule terrestre selon l'invention est notamment un véhicule roulant ou flottant, par exemple une automobile, un camion, un train ou un navire. En particulier, un véhicule selon l'invention est un véhicule susceptible de se déplacer sur un tronçon de voie déterminé (péniche sur un canal, automobile sur une route, train sur une voie ferrée, par exemple).

Ainsi, dans tout le texte un « tronçon de voie » est un tronçon de voie sur la terre ferme ou un tronçon de voie navigable, par exemple une voie ferrée, une route ou un canal.

Dans tout le texte, un « obstacle » désigne un obstacle physique immobile ou mobile et/ou un changement des conditions de circulation sur le tronçon de voie, notamment un changement des conditions de vitesse de circulation sur la voie. Un obstacle peut donc être de différentes natures : feu tricolore, stop, cédez-le-passage, rond-point, intersection, changement de limitation de vitesse (notamment d'une première vitesse limite à une deuxième vitesse limite de valeur plus basse), portion de voie courbe, portion de voie en pente, autre véhicule, personne, accident, écluse, pont, etc.

Dans le texte, le terme "accélération" est généralement utilisé dans son sens le plus large : une modification de vitesse, c'est à dire une accélération au sens commun du terme pour un véhicule ou une décélération. Le terme "décélération" en revanche est utilisé pour exprimer une diminution de la vitesse du véhicule dans son sens de déplacement, notamment une diminution de sa vitesse de déplacement dans le référentiel terrestre.

L'invention concerne donc un dispositif d'assistance à la gestion de consommation énergétique d'un véhicule, comprenant au moins :

- des données numériques représentatives au moins d'un tronçon de voie,
- des données numériques représentatives d'une position, dite position cible, d'un obstacle sur ledit tronçon de voie,
- des données numériques représentatives d'une vitesse, dite vitesse cible, à la position cible,
- une unité de traitement de données numériques,
caractérisé en ce que :

- il comprend en outre des données numériques représentatives d'au moins un profil de décélération optimale dudit véhicule, prédéterminé pour atteindre la position cible avec la vitesse cible,
- il comprend en outre des données numériques représentatives d'au moins un profil d'accélération, dit profil d'accélération nominale, du véhicule, comprenant au moins une valeur d'accélération, dite accélération nominale, positive selon une direction de déplacement principale dudit véhicule,
- l'unité de traitement est programmée pour produire des données représentatives d'une vitesse, dite vitesse maximale théorique, maximale pouvant être théoriquement atteinte par le véhicule en appliquant le profil d'accélération nominale tout en respectant ledit profil de décélération optimale pour atteindre la position cible à la vitesse cible, en fonction au moins :

  - de ladite position cible,
  - de ladite vitesse cible,
  - du profil de décélération optimale,
  - du profil d'accélération nominale.

En outre, avantageusement et selon l'invention l'unité de traitement est programmée pour produire, au moins en fonction dudit profil de décélération optimale, de ladite position cible et de ladite vitesse cible, des données numériques représentatives d'une position, dite position optimale de décélération, située sur le tronçon de voie et correspondant à une position à partir de laquelle la consommation d'énergie dudit véhicule peut être optimisée en mettant en œuvre ledit profil de décélération optimale.

Avantageusement et selon l'invention le profil d'accélération nominale peut être sélectionné par un utilisateur plusieurs profils prédéterminés d'accélération nominale (par exemple profil sportif, profil ville, profil autoroute, profil hiver, profil pluie...) et/ou de façon à minimiser la consommation énergétique du véhicule. Ainsi, un dispositif selon l'invention permet avantageusement d'optimiser, et notamment de minimiser, la consommation énergétique du véhicule pendant les phases d'accélération positive et pendant les phases de décélération.

L'inventeur s'est aperçu que les vitesses limites (qui correspondent généralement au type de voie: autoroute, nationale, secondaire, etc.) et les dénivelés ne sont pas suffisants pour calculer de façon fiable l'énergie réellement consommée par un véhicule, et ne sont donc pas suffisants pour calculer l'autonomie d'un véhicule. En effet, les phases d'accélération et de décélération respectivement après et avant un obstacle ont en fait un poids très important dans la consommation d'énergie et donc dans l'autonomie d'un véhicule et dans les émissions polluantes. En particulier, en zone urbaine, la densité d'obstacles (intersections, feux tricolores, circulation dense, etc.) est très élevée. La consommation d'énergie y est donc fortement impactée par cette densité élevée d'obstacles et par le mode de conduite. Or c'est justement en ville que les émissions de polluants liés à la circulation automobile posent à ce jour le plus de problèmes de santé publique.

Contrairement aux dispositifs connus de l'état de la technique, l'invention permet de prendre en compte le profil d'accélération propre au véhicule, ainsi que son profil de décélération propre, pour déterminer une vitesse maximale au-delà de laquelle le véhicule gaspillerait inutilement de l'énergie.

L'invention permet de prendre en compte les obstacles disposés sur le chemin d'un véhicule, qu'il s'agisse d'un itinéraire prédéterminé ou non. En effet, l'invention permet de gérer la consommation d'énergie d'un véhicule tronçon de voie par tronçon de voie, successivement.

En effet, lorsqu'un itinéraire est défini à l'avance, un dispositif selon l'invention applique avantageusement le profil de décélération à chaque obstacle fixe connu de cet itinéraire pour déterminer les différentes positions optimales de décélération et, le cas échéant, ajoute en cours de parcours des obstacles mobiles tels que par exemple un véhicule situé à l'avant du véhicule dont la consommation énergétique est assistée par un dispositif selon l'invention.

Lorsqu'au contraire l'itinéraire n'est pas défini à l'avance, un dispositif selon l'invention applique avantageusement le profil de décélération à chaque obstacle fixe situé sur une portion d'itinéraire située à l'avant du véhicule pour déterminer les différentes positions optimales de décélération au fur et à mesure de l'avancement du véhicule.

Selon une variante de l'invention, les données de trafic peuvent être prises en compte par une des multiples techniques connues. Par exemple avec un lidar (télédétecteur par laser) qui mesure la distance séparant le véhicule selon l'invention avec un obstacle mobile situé à l'avant. La vitesse de l'obstacle mobile et/ou son accélération peuvent être calculées avec la mesure de distance lidar et la mesure de vitesse du véhicule en fonction du temps. À cet obstacle mobile sont associés des paramètres de distance, vitesse et accélération/décélération. Ces paramètres sont pris en compte dans le calcul d'une nouvelle vitesse cible.

Ainsi un dispositif selon l'invention peut déterminer les positions optimales de décélération des obstacles situés sur les tronçons de voie en avant de lui et entre lesquels aucune alternative de changement d'itinéraire n'est possible : le véhicule est sur une voie sans intersection. En outre, un dispositif selon l'invention peut être adapté pour pouvoir anticiper l'emprunt de plusieurs itinéraires possibles lorsque le véhicule se trouve sur une voie présentant au moins une intersection en avant du véhicule.

L'invention permet d'éviter une surconsommation d'énergie liée à une accélération trop forte et/ou trop longue, qui obligerait le véhicule à freiner fortement avant l'obstacle, perdant ainsi tout le bénéfice de l'énergie consommée pour accélérer le véhicule dans un premier temps.

L'invention est particulièrement avantageuse sur des tronçons de voie courts, tels que ceux rencontrés en zone urbaine, par exemple entre deux feux tricolores successifs.

La longueur d'un tronçon de voie peut être déterminée de façon absolue à partir d'une carte, de façon statistique par exemple en fonction d'une densité de circulation sur le tronçon de voie, ou mesurée en temps réel par exemple par lecture d'éléments (panneaux, lignes, ...) de signalisation ou par mesure de distance avec un véhicule situé à l'avant du véhicule dont on souhaite optimiser la consommation énergétique.

Ainsi, dans certains modes de réalisation de l'invention, l'unité de traitement est programmée pour déterminer une position moyenne ou une distance moyenne par rapport audit véhicule de la position cible en fonction de données numériques représentatives de la densité de circulation sur le tronçon de voie au moins.

La vitesse limite est généralement la vitesse limite réglementaire déterminée par les autorités d'un pays pour ce tronçon de voie. Celle-ci est connue du dispositif soit à partir de données cartographiques enregistrées dont au moins une partie est représentative de cette vitesse limite, soit à partir de données qu'elle télécharge au fur et à mesure du parcours d'un itinéraire, soit elle est déterminée par lecture de panneaux de signalisation.

Cependant cette vitesse limite réglementaire peut être pondérée ou modifiée localement et/ou temporairement par un dispositif selon l'invention de sorte que la vitesse limite selon l'invention peut être distincte de la vitesse limite réglementaire. Ainsi, avantageusement l'unité de traitement est programmée pour déterminer une vitesse limite du véhicule sur le tronçon de voie au moins en fonction de données numériques représentatives de la densité de circulation sur le tronçon de voie. De même la vitesse limite peut correspondre à la vitesse réelle, normalement inférieure à la vitesse limite, à laquelle un conducteur conduit son véhicule.

Un profil de décélération optimale selon l'invention est avantageusement un profil de décélération optimale permettant de limiter la consommation d'énergie du véhicule.

Un profil de décélération optimale selon l'invention, sur un véhicule à récupération d'énergie en phase de décélération ou de freinage est adapté pour pouvoir transformer un maximum de l'énergie cinétique acquise par le véhicule en énergie stockée, notamment en énergie électrique.

Le profil de décélération optimale relie avantageusement une position (ou une distance) ou un temps (ou une durée) à une vitesse.

Un profil de décélération optimale selon l'invention comprend au moins une valeur homogène à une accélération, représentative d'une décélération d'un véhicule.

Plus avantageusement, le profil de décélération optimale comprend une pluralité de valeurs représentatives d'une pluralité de phases de décélération. Le profil de décélération optimale comprend par exemple des valeurs homogènes à des accélérations ou, de façon équivalente, une pluralité de couples de valeurs représentatives respectivement d'une position et d'une vitesse, ou encore respectivement de distance et de vitesse.

Le profil de décélération optimale comprend avantageusement une pluralité de coefficients d'équations au moins du second degré, chaque équations étant représentative d'une phase de décélération.

Un dispositif selon l'invention peut comprendre plusieurs profils de décélération.

Un dispositif selon l'invention comprend avantageusement plusieurs profils de décélération adaptés pour atteindre différentes vitesses cibles.

En particulier, il peut comprendre plusieurs profils de décélération correspondant à différents profils de conduites (par exemple sportive, classique ou économique) représentatives de différentes manières de conduire, et de différents niveaux d'optimisation de la consommation énergétique, de façon à satisfaire le plus grand nombre de conducteurs.

Un dispositif selon l'invention peut aussi comprendre plusieurs profils de décélération correspondant à différents conducteurs, chaque profil pouvant être affiné ou corrigé pour correspondre à un conducteur particulier.

Un dispositif selon l'invention peut aussi comprendre plusieurs profils de décélération correspondant à différentes conditions climatiques (route mouillée, route sèche, etc.)

Un dispositif selon l'invention peut aussi comprendre plusieurs profils de décélération correspondant à différents véhicules, notamment lorsqu'un dispositif selon l'invention n'est pas lié au véhicule mais est mis en œuvre sous la forme d'un dispositif mobile pouvant être déplacé d'un véhicule à un autre. De plus, un dispositif selon l'invention peut comprendre une pluralité de profils de décélération enregistrés en usine et correspondant à une pluralité de types de véhicule (camion, berline, monospace, etc.), voire à une pluralité de modèles de véhicules qu'un utilisateur peut présélectionner. En effet, le profil de décélération optimale d'un camion n'est évidemment pas le même que le profil de décélération optimale d'un véhicule de tourisme, leurs masses totales étant très distinctes.

De même, un dispositif selon l'invention peut comprendre une pluralité de profils de décélération correspondant à différents états de charge du véhicule, par exemple : camion avec ou sans remorque, avec une remorque vide ou une remorque pleine, péniche pleine de marchandises ou à vide.

Ces profils peuvent être corrigés en fonction de conditions telles que citées ci-avant (profil du conducteur, conditions météorologiques, etc.) ou plusieurs profils peuvent être mémorisés pour chaque modèle de véhicule.

En outre, l'unité de traitement est avantageusement programmée pour pouvoir modifier des données numériques représentatives d'un ou plusieurs profils de décélération optimale sélectionnés, de façon à pouvoir les corriger en fonction du véhicule et du mode de conduite. Ainsi, un dispositif selon l'invention est adapté pour faire évoluer au moins un profil de décélération optimale et l'adapter précisément à un véhicule et/ou à un conducteur.

Avantageusement, le dispositif affine des coefficients utilisés dans des équations et/ou des valeurs d'un profil de décélération optimale après chaque itinéraire parcouru. À cet effet, avantageusement et selon l'invention, l'unité de traitement est adaptée pour pouvoir remplacer dans une mémoire des données numériques représentatives d'au moins une partie d'un profil de décélération optimale en fonction de données, notamment de vitesse et/ou d'accélération, mesurées puis mémorisées au cours du parcours d'au moins un tronçon de voie.

De plus, dans un dispositif selon l'invention l'unité de traitement est avantageusement programmée pour pouvoir déterminer une vitesse limite en fonction de données représentatives d'un tronçon de voie situé à l'avant du véhicule. Plus particulièrement, l'unité de traitement est avantageusement programmée pour pouvoir déterminer une vitesse limite en fonction de données représentatives d'un itinéraire.

L'unité de traitement est aussi avantageusement programmée pour pouvoir traiter un tronçon de voie particulier, comme un obstacle et donc ajouter des obstacles (un tronçon de voie courbe par exemple) aux obstacles répertoriés (tels que les intersections).

Avantageusement, l'unité de traitement est programmée pour pouvoir déterminer une vitesse limite pour un tronçon de voie courbe au moins en fonction de données représentatives de la courbure du tronçon de voie. L'unité de traitement est en outre avantageusement programmée pour pouvoir déterminer une vitesse limite dans un tronçon de voie courbe en fonction d'au moins un paramètre choisi parmi la courbure du tronçon de voie, le type de véhicule et un niveau de confort souhaité.

Plus particulièrement, un dispositif selon l'invention comprend des données ou est adapté pour produire des données, représentatives d'une force d'adhérence latérale maximale du véhicule au-delà de laquelle le véhicule glisse latéralement. La force d'adhérence dépend du modèle de véhicule, mais peut aussi dépendre d'éléments variables tels que l'état de surface de la voie, l'état de surface des pneus, les conditions météorologiques, etc. Ces paramètres variables sont au moins pour partie pris en compte dans des modes de réalisations avantageux de l'invention.

L'unité de traitement du dispositif est aussi programmée pour calculer une force centrifuge à laquelle le véhicule est soumis dans un tronçon de voie courbe à la vitesse limite autorisée, en fonction de la courbure du tronçon de voie et de la vitesse limite autorisée sur le tronçon de voie.

L'unité de traitement est en outre programmée pour pouvoir calculer une force, dite force de confort, centrifuge, au-delà de laquelle le confort et/ou la sécurité des passagers du véhicule est engagé(e). Ladite force de confort est par exemple deux fois inférieure à la force d'adhérence latérale maximale du véhicule. L'unité de traitement est avantageusement programmée pour calculer une vitesse, dite vitesse de confort, à partir de la force de confort et de la courbure du tronçon de voie.

L'unité de traitement est en outre programmée pour pouvoir comparer ladite vitesse de confort et ladite vitesse limite autorisée sur le tronçon de voie courbe. Si la vitesse de confort est inférieure à la vitesse limite autorisée, l'unité de traitement traite le début du tronçon de voie courbe comme un obstacle, ladite vitesse cible pour la position cible de cet obstacle étant égale à ladite vitesse de confort. La sortie du tronçon de voie courbe est aussi traitée comme un nouvel obstacle. Dans le cas où le tronçon suivant est un deuxième tronçon de voie courbe, de rayon de courbure distinct, celui-ci est traité par l'unité de traitement de la même manière que décrit ci-dessus, de sorte que la vitesse cible en sortie du premier tronçon de voie courbe correspond à la vitesse de confort du deuxième tronçon de voie courbe. Sinon, la vitesse cible de la sortie du tronçon de voie courbe correspond à la vitesse limite autorisée.

Une unité de traitement de données selon l'invention comporte avantageusement au moins un processeur, et éventuellement des moyens de stockage de données internes (mémoire vive, mémoire persistante contenant des instructions, etc.). Une unité de traitement de données dans un dispositif selon l'invention est programmée pour pouvoir lire des données écrites dans une mémoire, et/ou recevoir des données d'un ou plusieurs capteurs et/ou d'un ou plusieurs autres dispositifs numériques, et traiter des données numériques.

De plus un dispositif selon l'invention comporte au moins une mémoire, dont la technologie est choisie en fonction des caractéristiques techniques attendues (persistance, vitesse de lecture/écriture, capacité, etc.). Ladite mémoire est adaptée pour stocker au moins des données numériques représentatives d'au moins un tronçon de voie, d'au moins une position cible, d'au moins une vitesse cible, d'au moins un profil de décélération optimale, d'au moins une position optimale de décélération.

Avantageusement et selon l'invention, ladite mémoire est adaptée pour aussi pouvoir stocker d'autres types de données choisies, le cas échéant, parmi des : données représentatives d'instructions suivies par l'unité de traitement, données météorologiques, données représentatives d'une position, données cartographiques, etc.

De plus, un dispositif selon l'invention comprend en outre avantageusement un dispositif de positionnement apte à fournir des données numériques, dites données de positionnement, représentatives de la position instantanée du véhicule.

Avantageusement et selon l'invention, l'unité de traitement est programmée pour effectuer une comparaison entre la position instantanée du véhicule et ladite position optimale de décélération.

Un dispositif de positionnement selon l'invention est avantageusement un dispositif de positionnement par satellites du type GPS par exemple. Néanmoins, d'autres dispositifs de positionnement peuvent être utilisés en remplacement ou en complément dans un dispositif selon l'invention : par exemple un dispositif de mesure de distance avec un véhicule situé devant, par exemple de type télémètre ou lidar.

L'unité de traitement est avantageusement programmée pour produire des données numériques représentatives d'au moins une consigne de conduite en fonction de la position du véhicule et de la position optimale de décélération. Lesdites consignes de conduite peuvent comprendre par exemple des consignes choisies parmi un changement de rapport d'une boîte de vitesse, une limitation ou un arrêt de la fourniture d'énergie au moteur, une utilisation du frein moteur, une utilisation des freins, etc.

Lesdites consignes de conduite peuvent être destinées à une interface homme/machine de façon à pouvoir être interprétées par un conducteur humain, ou bien elles peuvent être destinées à un automate de conduite du véhicule, par exemple un ordinateur de bord, ou un ordinateur de contrôle du véhicule.

À cet effet, un dispositif selon l'invention comporte avantageusement une interface adaptée pour un utilisateur humain, en particulier une interface homme/machine permettant à un utilisateur humain de saisir des données et/ou des modes de fonctionnement du dispositif, ainsi que permettant de diffuser des informations de façon compréhensible par un utilisateur humain.

L'interface peut être réalisée pour fonctionner selon différents modes de communication avec l'utilisateur humain choisies parmi : notamment optique (par exemple un écran) et acoustique (par exemple un dispositif d'alarme sonore), mais aussi haptique (par exemple un dispositif apte à transmettre une sensation sur un doigt), ou une combinaison de ces moyens, ou autre. Rien n'empêche que l'interface soit en fait celle d'un autre dispositif tel qu'un appareil numérique mobile.

L'interface avec un utilisateur permet à l'utilisateur d'interagir avec le dispositif. Elle permet en particulier d'entrer des données ou de sélectionner des modes de fonctionnement déterminés.

Par exemple, avantageusement, un dispositif selon l'invention est adapté pour proposer à un utilisateur de sélectionner - via une interface :

- un type de conduite, par exemple un mode « sportif », un mode « classique » et un mode « économie d'énergie »
- un type de véhicule (marque, modèle, puissance par exemple),
- etc.

Ces données d'entrée permettent audit dispositif de sélectionner au moins un profil de décélération optimale adapté au conducteur et/ou au véhicule.

L'interface avec l'utilisateur peut se baser sur des indications en vitesse affichant la vitesse cible pour l'obstacle à venir, facultativement la vitesse maximale théorique et/ou la vitesse limite légale.

Selon une autre variante, l'interface peut se baser sur des indications en accélération/décélération. En prenant une échelle numérique centrée sur zéro, la valeur zéro correspond à une accélération nulle c'est-à-dire une vitesse constante, les valeurs positives correspondent à une accélération positive et les valeurs négatives correspondent à une décélération. D'une manière simplifiée l'interface peut afficher trois états accélération, décélération et maintien de la vitesse (accélération nulle).

De plus, un dispositif selon l'invention comprend avantageusement en outre un dispositif accélérométrique apte à mesurer une accélération instantanée du véhicule au moins selon une direction de déplacement principale dudit véhicule, et à fournir des données numériques, dites données d'accélération, représentatives de cette accélération instantanée.

Ainsi, l'unité de traitement d'un dispositif selon l'invention peut comparer une accélération instantanée du véhicule avec un profil de décélération optimale et produire des consignes, ou les modifier, en fonction du résultat de cette comparaison.

Un dispositif accélérométrique permet à un dispositif selon l'invention de piloter la conduite - notamment les phases de décélération ou d'accélération - d'un véhicule de façon particulièrement réactive. En effet, la mesure de l'accélération réelle du véhicule par un dispositif accélérométrique est plus précise et plus rapide que la détermination de l'accélération dudit véhicule en fonction uniquement des mesures de vitesse de celui-ci.

Un dispositif selon l'invention est donc adapté pour produire des consignes représentatives d'une accélération du véhicule. Notamment, lorsqu'un dispositif selon l'invention est directement en charge du contrôle du véhicule, il pilote l'accélération du véhicule, c'est-à-dire qu'il contrôle l'accélération/la décélération du véhicule en fonction des mesures effectuées par le dispositif accélérométrique.

Cependant, le dispositif accélérométrique selon l'invention comprend avantageusement un accéléromètre trois axes. Ainsi, un tel dispositif accélérométrique est adapté pour mesurer l'accélération/la décélération du véhicule selon sa direction principale de déplacement, mais aussi selon une direction latérale à sa direction principale de déplacement permettant ainsi par exemple de déterminer la force centrifuge à laquelle le véhicule est soumis, et en outre selon une direction verticale permettant par exemple de déterminer l'inclinaison du véhicule, et donc la pente du tronçon de voie sur lequel il circule. L'unité de traitement est avantageusement programmée pour pouvoir prendre en compte les pentes des tronçons de voie empruntés de façon à adapter ses consignes (changement de rapport de boîte de vitesse), à affiner ses calculs de consommation énergétique, etc.

Plus particulièrement, avantageusement et selon l'invention, l'unité de traitement est programmée pour, ladite position instantanée du véhicule étant située sur le tronçon de voie entre la position optimale de décélération et la position cible, effectuer une comparaison entre l'accélération instantanée du véhicule et ledit profil de décélération optimale.

L'unité de traitement est programmée pour produire des données numériques représentatives d'une consigne dont le contenu est fonction de la comparaison entre l'accélération instantanée du véhicule et ledit profil de décélération optimale lorsque le véhicule est entre la position optimale de décélération et la position cible.

Après avoir comparé l'accélération instantanée du véhicule audit profil de décélération optimale, l'unité de traitement peut répéter ou modifier ladite consigne en fonction du résultat de cette comparaison. Ainsi, si une consigne de ralentir est produite par l'unité de traitement et que celle-ci n'est pas respectée, l'unité de traitement peut par exemple répéter la consigne ou envoyer une consigne de freiner.

De plus, un dispositif selon l'invention comprend avantageusement en outre un dispositif de mesure de vitesse adapté pour produire des données numériques représentatives de la vitesse instantanée du véhicule.

Le dispositif accélérométrique et/ou le dispositif de positionnement peuvent être utilisés pour calculer la vitesse du véhicule. Néanmoins rien n'empêche de prévoir d'autres dispositifs de mesure de vitesse, par exemple basés sur la lecture des lignes de signalisation au sol.

Alternativement un dispositif selon l'invention reçoit avantageusement des données représentatives de la vitesse instantanée du véhicule par exemple émises par l'ordinateur de bord du véhicule.

De plus, avantageusement et selon l'invention, l'unité de traitement est programmée pour, lorsque le véhicule a dépassé la position optimale de décélération, comparer la vitesse instantanée du véhicule à la vitesse attendue à cette position selon le profil de décélération optimal. Si la vitesse instantanée du véhicule est supérieure, une consigne correspondant à un ralentissement du véhicule peut être élaborée par l'unité de traitement.

Un dispositif de mesure de la vitesse du véhicule est particulièrement avantageux pour s'assurer que le véhicule est arrêté.

Avantageusement, un dispositif selon l'invention comprend à la fois un dispositif accélérométrique et un dispositif de mesure de vitesse.

Un dispositif selon l'invention comprend avantageusement en mémoire plusieurs profils d'accélération nominale, un profil d'accélération nominale étant sélectionné selon différentes conditions, de façon similaire aux conditions décrites en ce qui concerne le profil de décélération optimal.

De plus, avantageusement et selon l'invention, l'unité de traitement est programmée pour pouvoir déterminer ladite position optimale de décélération, en fonction de la position cible, de la vitesse cible, du profil de décélération optimale et du profil d'accélération nominale. En effet, sur des tronçons de voie courts, un véhicule n'a pas toujours le temps d'atteindre la vitesse limite et doit commencer à décélérer avant d'atteindre la vitesse pour pouvoir atteindre la position cible à la vitesse cible en appliquant au moins une portion du profil de décélération optimal.

Avantageusement et selon l'invention, l'unité de traitement est programmée pour produire des données représentatives d'une vitesse, dite vitesse maximale théorique, maximale pouvant être théoriquement atteinte par le véhicule en appliquant le profil d'accélération nominale tout en respectant ledit profil de décélération optimale pour atteindre la position cible à la vitesse cible, en fonction au moins :

- de ladite position cible,
- de ladite vitesse cible,
- du profil de décélération optimale,
- du profil d'accélération nominale.

La vitesse maximale théorique correspond, sur une distance déterminée entre la position cible et le début d'un tronçon de voie ou la position instantanée du véhicule, à la vitesse maximale théorique pouvant être atteinte par le véhicule sur cette distance, tout en appliquant le profil de décélération optimale à la fin du tronçon de voie, de façon à atteindre la position cible à la vitesse cible.

Avantageusement, la vitesse maximale théorique correspond à l'intersection entre le profil d'accélération nominal et le profil de décélération optimal.

Sur des tronçons de voie courts, la vitesse maximale théorique est donc souvent inférieure à la vitesse limite autorisée sur ce tronçon de voie. Cela est d'autant plus le cas que les tronçons de voie courts correspondent généralement à des voies urbaines où la vitesse limite autorisée est basse.

Pour la plupart des véhicules, sur des tronçons de voie très longs, la vitesse maximale théorique correspond à la vitesse maximale à laquelle le véhicule peut se déplacer et se trouve très au-delà de la vitesse limite autorisée sur la plupart des voies de circulation. Lorsque la longueur du tronçon de voie est supérieure à la distance d'accélération jusqu'à la vitesse maximale atteignable par le véhicule, la vitesse limite correspond donc à la vitesse limite autorisée.

Avantageusement et selon l'invention, l'unité de traitement est programmée pour produire des données représentatives d'une vitesse, dite vitesse maximale théorique, maximale pouvant être théoriquement atteinte par le véhicule en appliquant le profil d'accélération nominale tout en respectant ledit profil de décélération optimale pour atteindre la position cible à la vitesse cible, en fonction au moins :

- de ladite position cible,
- de ladite vitesse cible,
- du profil de décélération optimale,
- du profil d'accélération nominale,
- de la vitesse instantanée du véhicule.

C'est pourquoi, avantageusement et selon l'invention, l'unité de traitement est programmée pour :

- effectuer une première comparaison :

  - entre une vitesse, dite vitesse limite, maximale autorisée sur ledit tronçon de voie, et
  - la vitesse maximale théorique,
  - de façon à déterminer le minimum de ladite vitesse limite et de ladite vitesse maximale théorique,

- effectuer une deuxième comparaison entre la vitesse instantanée dudit véhicule et le résultat de la première comparaison.

Avantageusement, tant que le véhicule est à une vitesse inférieure à la vitesse limite, l'unité de traitement effectue cette comparaison, à moins que le suivi d'un profil de décélération optimale ne soit en cours.

Ainsi, sur un tronçon de voie long, la vitesse du véhicule à la position optimale de décélération est au maximum égale à la vitesse limite.

Sur un tronçon de voie très court, la vitesse du véhicule à la position optimale de décélération est généralement au maximum égale à ladite vitesse maximale théorique. C'est le cas lorsque le véhicule n'a pas le temps d'atteindre la vitesse limite pour pouvoir appliquer le profil de décélération optimal, même en appliquant le profil d'accélération nominal dans un premier temps ; par exemple en ville ou dans des conditions de circulation dense.

L'unité de traitement est programmée pour pouvoir comparer ladite vitesse limite et ladite vitesse maximale théorique, puis la vitesse instantanée et le résultat de la première comparaison, à tout instant, à chaque pas de temps ou à des intervalles de temps prédéterminés.

De plus, avantageusement et selon l'invention, l'unité de traitement est programmée pour pouvoir produire des données représentatives d'une consigne d'arrêt ou de limitation de l'injection d'énergie dans le moteur du véhicule dès que sa vitesse instantanée est égale ou supérieure au minimum de ladite vitesse maximale théorique et de ladite vitesse limite.

Avantageusement et selon l'invention, l'unité de traitement est programmée pour calculer une quantité d'énergie consommée par le véhicule sur un itinéraire prédéterminé comprenant au moins un tronçon de voie, avant le parcours dudit itinéraire par ledit véhicule.

L'unité de traitement est avantageusement programmée pour calculer de façon prédictive l'énergie consommée en appliquant le profil de décélération optimale avant chaque obstacle connu à l'avance d'un itinéraire déterminé. Ainsi, lorsqu'un utilisateur prévoit de se rendre d'une position de départ à une position d'arrivée, l'unité de traitement prend en compte chaque obstacle (intersection, changement de limitation de vitesse, etc.) et le profil de décélération optimale pour calculer de façon prédictive l'énergie qui sera consommée sur l'itinéraire déterminé entre la position de départ et la position d'arrivée. Ainsi, la consommation d'énergie et l'autonomie du véhicule est très précise grâce à un dispositif selon l'invention.

De plus, l'unité de traitement est avantageusement programmée pour calculer de façon prédictive l'énergie consommée en appliquant le profil d'accélération nominale après chaque obstacle connu à l'avance d'un itinéraire déterminé.

Un dispositif selon l'invention permet donc de prévoir de façon précise l'énergie consommée sur un itinéraire, notamment en prenant en compte de façon fiable la consommation d'énergie dans les phases d'accélération et de décélération.

Plus particulièrement, un dispositif selon l'invention est adapté pour déterminer de façon prédictive, c'est-à-dire avant le parcours d'un itinéraire, une quantité d'énergie consommée par le véhicule sur ledit itinéraire, sous forme de litres de carburant ou d'un pourcentage de batterie.

De même l'unité de traitement est avantageusement programmée pour calculer de façon prédictive la durée de parcours d'un itinéraire déterminé, de façon précise et fiable, en appliquant le profil de décélération optimale avant chaque obstacle connu à l'avance dudit itinéraire, et le cas échéant en appliquant le profil d'accélération nominale après chaque obstacle connu à l'avance dudit itinéraire.

Avantageusement et selon l'invention, l'unité de traitement est programmée pour pouvoir calculer de façon prédictive et comparer des quantités d'énergie consommée pour une pluralité d'itinéraires entre une position de départ et une position d'arrivée.

De même l'unité de traitement peut comparer la durée de parcours estimé pour différents itinéraires possibles entre ladite position de départ et ladite position d'arrivée.

Ainsi, un utilisateur peut sélectionner un itinéraire en fonction de la consommation d'énergie prévue et peut choisir un itinéraire particulièrement économe en énergie. De même, un dispositif selon l'invention est avantageusement adapté pour que l'itinéraire le plus économe en énergie soit automatiquement sélectionné.

Avantageusement et selon l'invention, un dispositif selon l'invention comprend au moins un premier profil, dit profil bas, de décélération optimale correspondant à une décélération rapide du véhicule, et un deuxième profil, dite profil haut, de décélération optimale correspondant à une décélération lente du véhicule. Les deux profils de décélération optimale forment un faisceau de décélération optimale, entre lesquels le véhicule doit se trouver lors d'une décélération pour optimiser sa consommation d'énergie. Il est en effet plus simple et plus réaliste, notamment lorsqu'un véhicule est piloté par un utilisateur humain de permettre à cet utilisateur d'adapter sa conduite à la situation de circulation qui se présente à lui, tout en lui fournissant des consignes lui permettant de minimiser sa consommation énergétique, et lui conseillant de rester dans le faisceau de décélération et notamment en lui envoyant une consigne ou un message informatif lorsqu'il est en deçà du profil bas ou au-delà du profil haut.

Un tel faisceau de décélération optimale permet de donner une fourchette de consommation énergétique et de temps de parcours d'un itinéraire.

Le faisceau peut être affiné au cours du temps, par apprentissage à partir de la façon de conduire de l'utilisateur. Ainsi, les prévisions de consommation d'énergie et de temps de parcours d'un itinéraire sont plus précises au cours du temps.

De même, deux profils d'accélération peuvent délimiter un faisceau d'accélération nominale dans lequel le véhicule se trouvera nécessairement en phase d'accélération.

Avantageusement, l'unité de traitement d'un dispositif selon l'invention compare en permanence la vitesse du véhicule et sa position par rapport au prochain obstacle situé sur le chemin du véhicule. Dès que la position et la vitesse du véhicule (soit une vitesse limite, soit une vitesse maximale théorique) correspondent à celles d'au moins un profil de décélération optimale, notamment un profil bas, une consigne est élaborée, représentative d'une demande de décélération du véhicule, afin de lui faire suivre un profil de décélération optimale.

Par ailleurs, un dispositif selon l'invention comprend avantageusement des moyens d'émission/réception de données. Ainsi, avantageusement, des données numériques représentatives de la densité de circulation sur un ou plusieurs tronçons de voie sont reçues et mémorisées par le dispositif. De même, d'autres données numériques représentatives de conditions environnementales (météorologiques par exemple), de la topographie d'au moins un tronçon de voie, de nouveaux obstacles permanents ou temporaires (position d'un accident par exemple) peuvent ainsi être reçues et mémorisées par le dispositif. De telles données peuvent être reçues périodiquement ou en temps réel.

L'unité de traitement est avantageusement programmée pour pouvoir recalculer de façon prédictive une quantité d'énergie consommée et/ou durée de parcours d'un itinéraire en fonction de données numériques reçues, notamment en cours de parcours d'un itinéraire, par exemple des données numériques représentatives de la densité de circulation sur des tronçons de voie de l'itinéraire prévu.

Avantageusement et selon l'invention, l'unité de traitement est aussi programmée pour calculer un indice de confort sur un itinéraire prédéterminé comprenant au moins un tronçon de voie, avant le parcours dudit itinéraire par ledit véhicule.

L'unité de traitement produit avantageusement des données numériques représentatives d'un indice de confort du trajet en fonction de différents paramètres. Ainsi, l'indice de confort du trajet peut être fonction du nombre de changement de rapport de boîte de vitesse à effectuer sur un itinéraire ainsi que du nombre de virages de leur rayon de courbure. Ces données numériques correspondent à des variations de vitesses et/ou d'accélération respectivement dans l'axe longitudinal du véhicule et dans l'axe transverse du véhicule. Dans ce cas second cas, on parle de force centrifuge qui en première approximation est égale à la masse du véhicule multipliée par le carré de ladite vitesse de confort divisée par le rayon du virage. Pour un véhicule donné et une valeur prédéterminée de force centrifuge, la vitesse de confort est donc calculée en fonction du rayon de courbure du virage.

L'unité de traitement est avantageusement programmée pour calculer plusieurs itinéraires en fonction de la consommation énergétique d'un véhicule et/ou de la durée la durée du parcours et/ou en variante du confort du trajet.

Pour une destination définie, l'unité de traitement est avantageusement apte à déterminer, de façon prédictive, la durée, la distance, la consommation d'énergie et le niveau de confort des différents parcours possibles en appliquant, selon les cas, le profil de décélération optimal et/ou le profil d'accélération nominal pour chaque obstacle desdits parcours.

Ainsi selon une variante de l'invention, l'unité de traitement est programmée pour produire des données numériques représentatives du confort du trajet défini par :

$$\text{Indice de confort normalisé} = 1/ \text{ Indice de confort}$$

où l'indice de confort est :

$$\text{Indice de confort} = \sum |\Delta Ac| + \sum |\Delta Ac_{Trans}|$$

où $\Delta Ac$ représente les variations d'accélération dans l'axe longitudinal du véhicule et $\Delta Ac_{Trans}$ les variations de l'accélération dans l'axe transverse du véhicule s'exerçant dans les tronçons de voie courbe.

L'indice de confort utilise la somme des accélérations dans l'axe longitudinal et/ou la somme de celles dans l'axe transverse. De manière avantageuse, l'indice de confort peut intégrer d'autres paramètres comme le niveau de trafic.

L'invention propose ainsi un dispositif permettant de choisir un itinéraire en fonction des caractéristiques du trajet (durée, distance, consommation) en prenant en compte le niveau de confort caractérisé par un nombre minimum d'accélérations et de décélérations.

De plus, avantageusement, un dispositif d'assistance à la gestion de la consommation énergétique d'un véhicule selon l'invention peut comporter une pluralité d'éléments répartis spatialement et reliés en réseau, avec ou sans fil. Ainsi, le dispositif de vitesse du véhicule peut être relié à un dispositif selon l'invention, ainsi qu'un dispositif accélérométrique d'un téléphone mobile peut être relié à un dispositif selon l'invention, etc.

Un dispositif selon l'invention comprend par exemple des moyens de communication sans fil courte distance (Bluetooth® par exemple) et/ou longue distance (GSM, GPRS,... par exemple). Il peut aussi avantageusement comprendre des ports de connexion, par exemple un port de connexion de type OBD2 pour pouvoir être relié à l'ordinateur de bord du véhicule.

En outre, avantageusement et selon l'invention, l'unité de traitement est programmée pour comparer la distance, dite distance de tronçon, séparant un premier obstacle d'un deuxième obstacle successifs à une distance, dite distance maximale de décélération, prédéterminée, puis, lorsque la distance de tronçon est inférieure à la distance maximale de décélération :

- déterminer une première position optimale de décélération pour le premier obstacle,
- déterminer une deuxième position optimale de décélération pour le deuxième obstacle,
- comparer la première position optimale de décélération et la deuxième position optimale de décélération, puis, lorsque la première position optimale de décélération est située après la deuxième position optimale de décélération, ignorer ledit premier obstacle.

Cette suite d'opérations permet de mieux gérer la consommation d'énergie du véhicule, en adaptant sa vitesse aux obstacles de son itinéraire. En effet, dans cette situation, si un dispositif selon l'invention ne prend en compte que l'obstacle situé au-devant du véhicule, ce dernier serait amené à suivre une courbe de décélération moins optimale que le profil de décélération optimale prévu par l'invention.

Cette suite d'opérations permet aussi d'éliminer à l'avance un certain nombre d'obstacles, notamment lorsqu'au moins deux obstacles successifs sont rapprochés.

Cette fonctionnalité est particulièrement avantageuse lorsque l'itinéraire à parcourir est connu à l'avance. En effet, les distances entre obstacles fixes successifs sont alors connues dès le départ et nombre d'obstacles peuvent ainsi être ignorés, notamment en ville où les obstacles sont rapprochés les uns des autres.

La distance maximale de décélération est avantageusement prédéterminée et enregistrée dans une mémoire sous forme de données numériques.

La distance maximale de décélération est avantageusement déterminée comme la distance parcourue par le véhicule pour s'arrêter selon le profil de décélération optimale à partir d'une vitesse, dite vitesse constructeur, maximale pouvant être atteinte par le véhicule. Alternativement la distance maximale de décélération est avantageusement déterminée comme la distance parcourue par le véhicule pour s'arrêter selon le profil de décélération optimale à partir de la vitesse maximale autorisée sur un tronçon de voie en général : par exemple 130km/h en France sur les voies pour automobiles. Alternativement la distance maximale de décélération est avantageusement déterminée comme la distance parcourue par le véhicule pour s'arrêter selon le profil de décélération optimale à partir de la vitesse limite autorisée sur le tronçon de voie précédent le premier obstacle.

Avantageusement et selon l'invention, l'unité de traitement est programmée pour :

- comparer la distance, dite distance de tronçon, séparant deux obstacles successifs à une distance, dite distance maximale de décélération, puis, lorsque la distance de tronçon est inférieure à la distance maximale de décélération :

  • comparer une première vitesse cible correspondant à une première position cible et une deuxième vitesse cible correspondant à une deuxième position cible, puis, lorsque la deuxième vitesse cible est inférieure à la première vitesse cible :

    ❖ déterminer une première position optimale de décélération pour le premier obstacle,

    ❖ déterminer une deuxième position optimale de décélération pour le deuxième obstacle,

    ❖ comparer la première position optimale de décélération et la deuxième position optimale de décélération, puis, lorsque la première position optimale de décélération est située après la deuxième position optimale de décélération, ignorer ledit premier obstacle.

Ainsi, avantageusement et selon l'invention, la détermination de la position optimale de décélération n'est réalisée que lorsque la vitesse cible correspondant à un deuxième obstacle suivant le premier obstacle est inférieure à la vitesse cible correspondant au premier obstacle.

L'étape de comparaison de la première vitesse cible et de la deuxième vitesse cible permet d'alléger la mise en œuvre de l'invention par une unité de traitement. En effet, la première vitesse cible et la deuxième vitesse cible sont assez aisément déterminée à partir d'un profil de décélération optimale et une comparaison est une opération simple. Ces étapes permettent de ne pas mener les étapes suivantes dans de nombreux cas, et ainsi d'alléger le processus de détermination de l'énergie consommée et/ou de la durée de parcours sur un itinéraire.

L'invention s'étend également à un procédé d'assistance à la gestion de la consommation énergétique d'un véhicule, caractérisé en ce qu'il comprend au moins une étape dans laquelle une vitesse, dite vitesse maximale théorique, est déterminée, ladite vitesse maximale théorique :

- correspondant à une vitesse maximale pouvant être théoriquement atteinte par le véhicule:

  ▪ en appliquant un profil d'accélération, dit profil d'accélération nominale, comprenant au moins une valeur d'accélération, dite accélération nominale, positive selon une direction de déplacement principale dudit véhicule,
  ▪ tout en respectant un profil de décélération optimale prédéterminé pour atteindre une position, dite position cible, d'un obstacle sur ledit tronçon de voie, avec une vitesse, dite vitesse cible,

- étant déterminée au moins à partir de :

  ▪ de ladite position cible,
  ▪ de ladite vitesse cible,
  ▪ du profil de décélération optimale,
  ▪ du profil d'accélération nominale.

En outre un procédé selon l'invention comprend au moins une étape dans laquelle une position, dite position optimale de décélération, est déterminée, ladite position optimale de décélération :

- étant située sur un tronçon de voie,
- correspondant à une position à partir de laquelle la consommation d'énergie dudit véhicule peut être optimisée en mettant en œuvre un profil de décélération optimale prédéterminé pour atteindre une position, dite position cible, d'un obstacle sur ledit tronçon de voie, avec une vitesse, dite vitesse cible,

- déterminée au moins à partir :

  - de ladite position cible,
  - de ladite vitesse cible,
  - dudit profil de décélération optimale.

Plus particulièrement, avantageusement et selon l'invention, la position optimale de décélération est en outre déterminée à partir du profil d'accélération nominale du véhicule.

L'unité de traitement d'un dispositif selon l'invention est programmée pour pouvoir mettre en œuvre des étapes d'un procédé conforme à l'invention.

L'invention s'étend également à un programme d'ordinateur comprenant des instructions de code de programme pour l'exécution des étapes d'un procédé selon l'invention lorsque ledit programme est exécuté sur un ordinateur, notamment sur un dispositif selon l'invention.

L'invention s'étend aussi à un programme informatique comprenant des instructions pour l'exécution d'un procédé conforme à l'invention lorsque le programme est exécuté par un dispositif comprenant au moins une unité de traitement de données, notamment par un dispositif conforme à l'invention.

L'invention s'étend à un support d'enregistrement sur lequel est enregistré un programme selon l'invention, ainsi qu'à un dispositif ou un véhicule dans lequel un tel programme est enregistré.

L'invention s'étend également à un véhicule comprenant un dispositif selon l'invention et/ou adapté pour pouvoir mettre en œuvre un procédé selon l'invention. En particulier, l'invention vise un véhicule comprenant un ordinateur de bord adapté pour pouvoir mettre en œuvre un procédé selon l'invention de façon à proposer les fonctions d'un dispositif conforme à l'invention.

L'invention concerne également un dispositif d'assistance à la gestion de consommation énergétique d'un véhicule caractérisé en combinaison par tout ou partie des caractéristiques mentionnées ci-dessus ou ci-après. L'invention s'étend en particulier aussi à un dispositif adapté pour mettre en œuvre un procédé selon l'invention.

L'invention concerne également un procédé d'assistance à la détermination d'itinéraire en fonction de la gestion de consommation énergétique, de la durée du trajet et avantageusement du confort du trajet d'un véhicule caractérisé en combinaison par tout ou partie des caractéristiques mentionnées ci-dessus ou ci-après.

L'invention concerne également un procédé d'assistance à la gestion de consommation énergétique d'un véhicule caractérisé en combinaison par tout ou partie des caractéristiques mentionnées ci-dessus ou ci-après, notamment des étapes décrites en relation avec ledit dispositif comme pouvant être mise en œuvre par celui-ci.

L'invention concerne également un programme informatique caractérisé en combinaison par tout ou partie des caractéristiques mentionnées ci-dessus ou ci-après, y compris par des caractéristiques de procédé, ledit dispositif étant adapté pour mettre en œuvre un procédé selon l'invention.

D'autres buts, caractéristiques et avantages de l'invention apparaîtront à la lecture de la description suivante donnée à titre non limitatif et qui se réfère aux figures annexées dans lesquelles :

- la figure 1 est une représentation schématique de profils de décélération optimale conformes à l'invention,
- la figure 2 est une représentation schématique de plusieurs tronçons de voie successifs,
- la figure 3 est une représentation schématique correspondant à la gestion de la vitesse d'un véhicule par un dispositif et selon un procédé conformes à l'invention sur les tronçons de voie représentés en figure 2,
- la figure 4 est une représentation schématique correspondant à la gestion d'une phase d'accélération puis d'une phase de décélération par un dispositif et selon un procédé conformes à l'invention,
- la figure 5 est une représentation schématique de la préparation d'un itinéraire par un dispositif et selon un procédé conformes à l'invention.

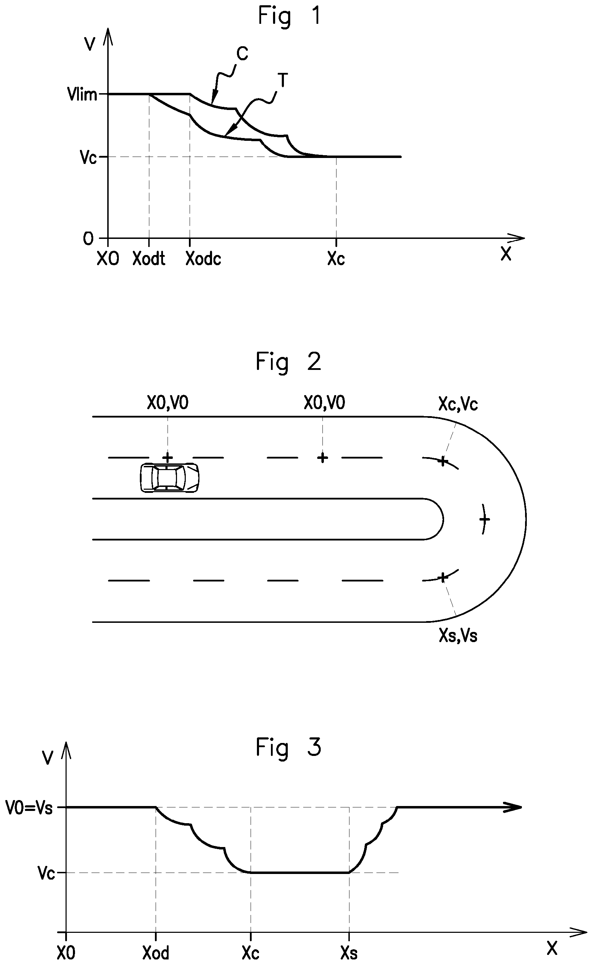

En figure 1, deux profils de décélération optimale sont représentés. La vitesse V d'un véhicule est représentée en fonction de sa position X sur un tronçon de voie qui se termine par la position cible Xc d'un obstacle. La vitesse limite autorisée sur ledit tronçon de voie s'étendant de la position 0 à la position cible Xc est une vitesse limite Vlim. Ledit tronçon de voie est suivi d'un deuxième tronçon de voie qui débute à la position cible Xc, et sur lequel la vitesse limite autorisée est la vitesse cible Vc inférieure à la vitesse limite Vlim. Un véhicule peut donc légalement parcourir la portion de tronçon de voie de la position X0 jusqu'à la position cible Xc à la vitesse limite Vlim.

Un obstacle se trouve à la position cible Xc sur le chemin des véhicules empruntant ces tronçons de voie et doit être franchi par tout véhicule à la vitesse cible Vc. L'obstacle correspond à un changement de vitesse limite autorisée de la vitesse limite Vlim à la vitesse cible Vc.

Un premier profil de décélération optimale représenté par la courbe C correspond à un profil de décélération optimale d'une automobile. Un deuxième profil de décélération optimale représenté par la courbe T correspond à un profil de décélération optimale d'un camion. L'inertie d'un camion étant supérieure à cette d'une automobile, le profil de décélération optimale du camion présente une décélération moyenne (correspondant à la pente moyenne de la courbe T) par unité de distance de valeur inférieure à la valeur de la décélération moyenne (correspondant à la pente moyenne de la courbe C) du profil de décélération optimale de l'automobile.

Lesdits profils de décélération optimale présentés sont adaptés pour permettre respectivement à une automobile et à un camion de passer de la vitesse limite Vlim à la vitesse cible Vc en limitant au maximum leur consommation d'énergie sur le tronçon de voie s'étendant de la position 0 à la position cible Xc.

Lesdits profils de décélération optimale présentés comprennent plusieurs portions de courbes décroissantes. Le passage d'une portion de profil de décélération optimale à une autre correspond à un changement de rapport sur une boîte de vitesse. Ces portions de courbes sont enregistrées dans une mémoire du dispositif sous formes de données numériques représentatives d'une pluralité d'équations au moins du second degré.

Lesdits profils de décélération optimale respectivement de l'automobile (courbe C) et du camion (courbe T) sont appliqués par l'unité de traitement à la position cible Xc et à la vitesse cible Xc. L'unité de traitement recherche ensuite la vitesse de chaque profil de décélération optimale qui correspond à la vitesse limite Vlim, par exemple par résolution de l'équation représentative du profil de décélération optimale. A cette vitesse limite Vlim du profil de décélération optimale correspond une position, ou plutôt une distance à partir de la position cible Xc. Cette distance correspond à une distance de décélération du véhicule. Cette distance permet de déterminer une position optimale de décélération Xodc pour l'automobile et une position optimale de décélération Xodt pour le camion.

C'est à partir de cette position optimale de décélération Xodc (respectivement Xodt) que l'unité de traitement produit des consignes de pilotage du véhicule en décélération : par exemple changement de rapport, utilisation du frein moteur, diminution de l'injection d'énergie dans le moteur à un niveau prédéterminé, le cas usage des freins, etc.

Ainsi, une automobile dont la boîte de vitesse était sur son sixième rapport en position Xodc est sur son troisième rapport en position Xc selon le profil de décélération optimale représenté en figure 1.

La figure 2 est représentative d'un tronçon de voie à vitesse limite autorisée V0 uniforme. Cependant, celui-ci présente un virage. L'unité de traitement d'un dispositif selon l'invention traite donc ce virage comme un tronçon de voie courbe à part entière, de sorte qu'elle divise le tronçon de voie en trois tronçons de voie : un premier tronçon de voie avant le virage, un deuxième tronçon de voie dans le virage, un troisième tronçon de voie après le virage.

L'unité de traitement place une position cible Xc à l'entrée du virage : c'est la fin du premier tronçon, qui s'étend de la position instantanée X0 du véhicule à la position cible Xc. La position cible Xc marque le début du deuxième tronçon de voie, qui s'étend de la position cible Xc à une position de sortie Xs du virage. La position Xs est soit placée à l'avance par l'unité de traitement en fonction de données cartographiques, soit déterminée par l'unité de traitement lorsque le véhicule sort du virage, par exemple par une reconnaissance d'images acquises à l'avant du véhicule et dont l'analyse permet de déterminer qu'il s'agit d'un tronçon de voie de courbure distincte au deuxième tronçon de voie.

L'unité de traitement détermine ensuite la vitesse cible du deuxième tronçon de voie courbe. Celle-ci est calculée en fonction de la force d'adhérence latérale maximale du véhicule. La force d'adhérence latérale maximale est d'abord divisée par deux. En effet, une force centrifuge de confort égale à la moitié de la force d'adhérence latérale maximale est considérée comme acceptable.

L'unité de traitement calcule ensuite la vitesse cible correspondant à cette force centrifuge pour la courbure du deuxième tronçon de voie courbe par l'équation :

$$Vc = \sqrt{\frac{F_{cent} \cdot R_{curb}}{m}}$$

dans laquelle Vc est la vitesse cible, Fcent est la force centrifuge de confort, Rcurb est le rayon de courbure du deuxième tronçon de voie courbe, et m est la masse du véhicule.

L'unité de traitement choisi ensuite un profil de décélération optimale C adapté à la situation parmi plusieurs profils de décélération optimale. L'unité de traitement choisi un profil de décélération en fonction d'au moins un paramètre choisi parmi : la vitesse cible, le modèle du véhicule, le chargement du véhicule, les conditions météorologiques, le profil du conducteur, ...

L'unité de traitement applique ensuite ce profil de décélération optimale C à la position cible Xc et à la vitesse cible Vc, comme représenté en figure 3 de façon à déterminer une position optimale de décélération Xod.

Le véhicule peut donc se déplacer de sa position instantanée X0 jusqu'à la position Xc à la vitesse V0. A la position X0, l'unité de traitement produit une première consigne permettant au véhicule de suivre le profil de décélération optimale C, et poursuit jusqu'à ce que le véhicule atteigne la position Xc à la vitesse Vc.

Le véhicule parcourt ensuite le deuxième tronçon de voie, courbe, à la vitesse cible jusqu'à atteindre la position de sortie Xs. A la position Xs, le véhicule peut circuler à la vitesse Vs qui est égale à la vitesse limite autorisée V0.

À partir de la position Xs, l'unité de traitement produit des consignes pour que le véhicule suive un profil d'accélération nominale N choisie parmi une pluralité de profils d'accélération nominale, en fonction de paramètres tels que : la vitesse cible, la vitesse limite, le modèle du véhicule, le chargement du véhicule, les conditions météorologiques, le profil du conducteur, ...

Le profil d'accélération nominale permet au véhicule de passer de la vitesse cible Vc à la vitesse de sortie Vs (égale à la vitesse limite autorisée V0).

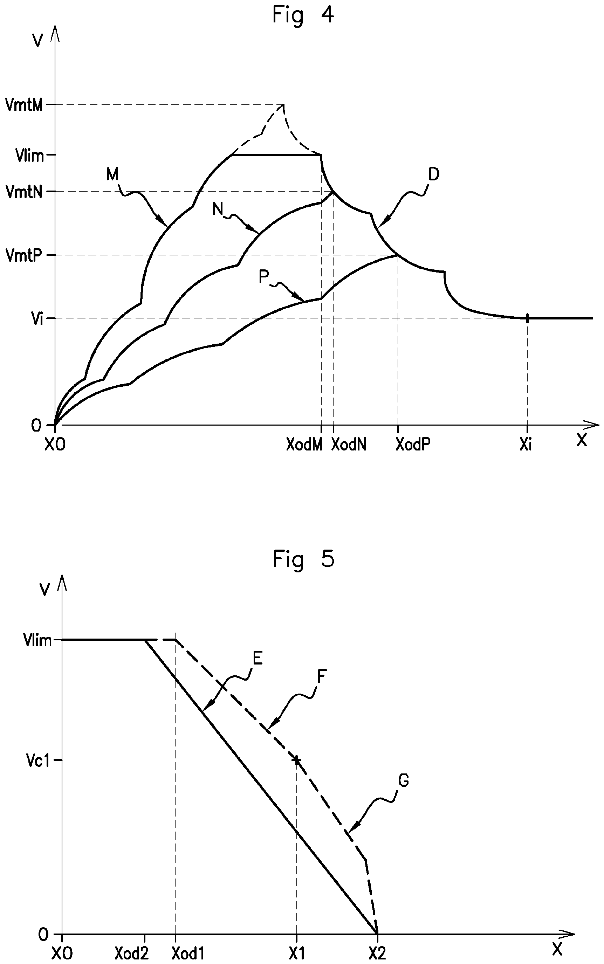

En figure 4, plusieurs profils d'accélérations nominale sont représentés par les courbes M, N et P. Ces trois profils d'accélération nominale correspondent à trois modes d'accélération d'un même véhicule à partir d'une vitesse nulle. Ainsi, la courbe M correspond à une accélération rapide du véhicule, c'est-à-dire à une conduite de type « sportif ». La courbe P correspond à une accélération lente du véhicule, c'est-à-dire à une conduite de type « économique ». La courbe N correspond à une conduite de type « normal », intermédiaire entre une conduite de type « sportif » et une conduite de type « économique ».

En outre, un profil de décélération optimale est représenté par la courbe D pour atteindre une position cible Xi à une vitesse cible Vi différente de zéro.

Un tronçon de voie s'étend de la position initiale X0 à la position cible Xi à laquelle intervient un changement de vitesse limite autorisée de la vitesse limite Vlim à la vitesse cible Vi.

Pour déterminer la position optimale de décélération, l'unité de traitement détermine d'abord la vitesse maximale théorique pouvant être atteinte par le véhicule sur le tronçon de voie X0-Xi. La vitesse maximale théorique correspond à la vitesse maximale pouvant être théoriquement atteinte par le véhicule en appliquant le profil d'accélération nominale tout en respectant ledit profil de décélération optimale pour atteindre la position cible à la vitesse cible. La vitesse maximale théorique correspond donc, sur un graphique, à l'intersection entre le profil d'accélération nominale et le profil de décélération optimale.

Ainsi par exemple pour le profil d'accélération nominale de type « économique », la vitesse maximale théorique VmtP correspond au croisement entre la courbe P et la courbe D. Pour le profil d'accélération nominale représenté par la courbe P, celui-ci intervient à la position optimale de décélération XodP. L'unité de traitement détermine par exemple la vitesse maximale théorique VmtP en résolvant une équation selon laquelle la position et la vitesse sont égales pour la courbe P et pour la courbe D.

L'unité de traitement compare ensuite cette vitesse maximale théorique VmtP à la vitesse limite Vlim sur le tronçon de voie X0-Xi. Dans le cas représenté à la figure 4, la vitesse maximale théorique VmtP est inférieure à la vitesse limite Vlim. C'est donc la vitesse maximale théorique VmtP qui permet de déterminer position optimale de décélération XodP à partir de laquelle le véhicule doit suivre le profil de décélération optimale représentée par la courbe D en vue de minimiser sa consommation d'énergie pour atteindre la position cible Xi à la vitesse cible Vi.

De façon similaire, la vitesse maximale théorique VmtN lorsque le profil d'accélération nominale de type « normal » est sélectionné est inférieur à la vitesse limite Vlim du tronçon de voie X0-Xi. Avec le profil d'accélération nominale de type « normal » représenté par la courbe N, le véhicule atteint une vitesse maximale VmtN à la position optimale de décélération XodN avant de commencer à décélérer selon le profil de décélération optimale représentée par la courbe D.

De même, lorsqu'un profil d'accélération nominale de type « sportif » représenté sur la figure 4 par la courbe M est sélectionné, l'unité de traitement détermine dans un premier temps la vitesse maximale théorique VmtM correspondante. L'unité de traitement compare ensuite cette vitesse maximale théorique VmtM à la vitesse limite Vlim sur le tronçon de voie X0-Xi. Dans l'exemple présenté, la vitesse maximale théorique VmtM est supérieure à la vitesse limite Vlim. L'unité de traitement détermine donc la position optimale de décélération XodM en fonction du profil de décélération optimale représentée par la courbe D et de la vitesse limite Vlim. Ainsi lorsqu'un profil accélération nominal de type « sportif » est sélectionné, le véhicule atteint la vitesse limite Vlim autorisée sur le tronçon de voie X0-Xi et circule à cette vitesse limite Vlim pendant une certaine durée jusqu'à atteindre la position optimale de décélération XodM.

L'unité de traitement émet avantageusement des consignes en accélération permettant aux véhicules de se trouver dans un faisceau de décélération optimale (ou d'accélération nominale) comprise entre deux profils de décélération optimale (respectivement d'accélération nominale). Ainsi par exemple, au lieu de piloter un véhicule en accélération selon un profil d'accélération nominale telle que le profil de type « économique » représenté par la courbe P, un véhicule peut être piloté de façon à toujours se trouver entre le profil d'accélération nominale de type « économique » représenté par la courbe P et le profil d'accélération nominale de type « normal » représenté par la courbe N. La position optimale de décélération sera alors située entre la position optimale de décélération XodN du profil d'accélération nominale de type « normal » et la position optimale de décélération XodP du profil d'accélération nominale de type « économique ». Il en va de même pour les profils de décélération optimale.

En figure 5, un premier tronçon de voie s'étend de la position X0 à la première position cible X1 et un deuxième tronçon de voie s'étend de la première position cible X1 à la deuxième position cible X2. Sur le premier tronçon de voie X0-X1 la vitesse limite autorisée est une vitesse limite Vlim. Sur le deuxième tronçon de voie X1-X2 la vitesse limite autorisée est une vitesse limite correspondant à la vitesse cible Vc1 de la première position cible X1. La vitesse cible de la deuxième position cible X2 est égale à zéro.

Lors de la préparation d'un itinéraire, l'unité de traitement détermine la distance entre la première position cible X1 et la deuxième position cible X2 puis la compare à une valeur de distance enregistrée correspondant à la distance maximale de décélération selon un profil de décélération optimale déterminée pour passer de la vitesse cible Vc1 à une vitesse nulle.

Dans le cas particulier représenté en figure 5, la distance entre la première position cible X1 et la deuxième position cible X2 est inférieure à ladite distance maximale de décélération enregistrée en mémoire. L'unité de traitement ignore donc l'obstacle situé à la première position cible X1, et applique directement un profil de décélération optimale adapté pour atteindre la deuxième position cible X2 avec une vitesse nulle. L'unité de traitement détermine ainsi la position optimale de décélération Xod2 à partir de laquelle un profil de décélération optimale représentée par la courbe E doit être suivi pour atteindre la deuxième position cible X2 avec une vitesse nulle. Tout se passe donc comme si aucun obstacle (dans l'exemple présenté un changement de vitesse limite autorisée) n'était présent à la première position cible X1.

Alternativement, l'unité de traitement applique d'abord un profil de décélération optimale à la première position cible X1, ledit profil étant adapté pour passer de la vitesse limite Vlim à la vitesse cible Vc1. Un tel profil de décélération optimale est représenté en figure 5 par la courbe F. Cela permet de déterminer une position optimale de décélération Xod1 à partir de laquelle un profil de décélération optimale représentée par la courbe F doit être suivi pour atteindre la première position cible X1 avec la vitesse cible Vc1.

L'unité de traitement détermine ensuite la position optimale de décélération Xod2 à partir de laquelle un profil de décélération optimale représentée par la courbe E doit être suivi pour atteindre la deuxième position cible X2 avec une vitesse nulle, comme décrit ci-dessus.

L'unité de traitement compare ensuite la position optimale de décélération Xod1 et la position optimale de décélération Xod2. La position optimale de décélération Xod2 étant située avant la position optimale de décélération Xodl, l'unité de traitement ignore l'obstacle situé à la première position cible X1.

En effet, le véhicule doit commencer à ralentir en suivant le profil de décélération optimale représenté par la courbe E à la position optimale de décélération Xod2 pour atteindre la deuxième position cible X2 avec une vitesse nulle, tout en atteignant la première position cible X1 à une vitesse inférieure à la vitesse cible Vc1 (qui correspond à la vitesse maximale autorisée sur le deuxième tronçon de voie X1-X2). Si le véhicule ne commence à ralentir qu'à la position optimale de décélération Xod1 avec le profil de décélération optimale représenté par la courbe F, il atteindra bien la première position cible X1 à la vitesse cible Vc1. Cependant il ne pourra pas atteindre la deuxième position cible X2 en suivant un profil de décélération optimale. Comme le montre la courbe G, le véhicule sera tenu de freiner fortement juste avant la deuxième position cible X2 pour pouvoir l'atteindre avec une vitesse nulle : la longueur du deuxième tronçon de voie X1-X2 n'est pas suffisante pour pouvoir appliquer un profil de décélération optimale. En effet, un tel freinage n'est pas avantageux car il ne permet pas de tirer pleinement parti de l'inertie du véhicule acquise en consommant de l'énergie dans une phase d'accélération antérieure.

Dans cet exemple les profils de décélération optimale E et F sont des profils linéaires simples. Chacun de ces profils est par exemple enregistré en mémoire sous forme de données numériques représentatives d'une valeur (une valeur d'accélération négative correspondant aux pentes des courbes E et F).

L'invention peut faire l'objet de nombreuses autres variantes de réalisation non représentées.

En particulier, comme vu ci-dessus, les résultats obtenus par certaines fonctions mises en œuvre par l'invention peuvent être obtenus par des procédés équivalents.

## Revendications

**1.** - Dispositif d'assistance à la gestion de consommation énergétique d'un véhicule, comprenant au moins :

- des données numériques représentatives au moins d'un tronçon de voie,
- des données numériques représentatives d'une position, dite position cible (Xc), d'un obstacle sur ledit tronçon de voie,
- des données numériques représentatives d'une vitesse, dite vitesse cible (Vc), du véhicule à la position cible,
- une unité de traitement de données numériques,
**caractérisé en ce que** :

- il comprend en outre des données numériques représentatives d'au moins un profil de décélération optimale (C) dudit véhicule, prédéterminé pour atteindre la position cible (Xc) avec la vitesse cible (Vc),
- il comprend en outre des données numériques représentatives d'au moins un profil d'accélération, dit profil d'accélération nominale (N), du véhicule, comprenant au moins une valeur d'accélération, dite accélération nominale, positive selon une direction de déplacement principale dudit véhicule,
- l'unité de traitement est programmée pour produire des données représentatives d'une vitesse, dite vitesse maximale théorique (VmtN), maximale pouvant être théoriquement atteinte par le véhicule en appliquant le profil d'accélération nominale (N) tout en respectant ledit profil de décélération optimale (C) pour atteindre la position cible à la vitesse cible, en fonction au moins :

- de ladite position cible (Xc),
- de ladite vitesse cible (Vc),
- du profil de décélération optimale (C),
- du profil d'accélération nominale (N).

**2.** - Dispositif selon la revendication 1, **caractérisé en ce que** l'unité de traitement est programmée pour produire, au moins en fonction dudit profil de décélération optimale (C), de ladite position cible (Xc) et de ladite vitesse cible (Vc), des données numériques représentatives d'une position, dite position optimale de décélération (Xodc), située sur le tronçon de voie et correspondant à une position à partir de laquelle la consommation d'énergie dudit véhicule peut être optimisée en mettant en œuvre ledit profil de décélération optimale (C).

**3.** - Dispositif selon l'une des revendications 1 ou 2, **caractérisé en ce qu'**il comprend en outre un dispositif de positionnement apte à fournir des données numériques, dites données de positionnement, représentatives de la position instantanée du véhicule.

**4.** - Dispositif selon la revendication 3, **caractérisé en ce que** l'unité de traitement est programmée pour effectuer une comparaison entre la position instantanée du véhicule et ladite position optimale de décélération (Xodc).

**5.** - Dispositif selon l'une des revendications 1 à 4, **caractérisé en ce qu'**il comprend en outre un dispositif accélérométrique apte à mesurer une accélération instantanée du véhicule au moins selon une direction de déplacement principale dudit véhicule, et à fournir des données numériques, dites données d'accélération, représentatives de cette accélération instantanée.

**6.** - Dispositif selon les revendications 4 et 5, **caractérisé en ce que** l'unité de traitement est programmée pour, ladite position instantanée du véhicule étant située sur le tronçon de voie entre la position optimale de décélération (Xodc) et la position cible (Xc), effectuer une comparaison entre l'accélération instantanée du véhicule et ledit profil de décélération optimale (C).

**7.** - Dispositif selon l'une des revendications 1 à 6, **caractérisé en ce qu'**il comprend en outre un dispositif de mesure de vitesse adapté pour produire des données numériques représentatives de la vitesse instantanée du véhicule.

**8.** - Dispositif selon l'une des revendications 1 à 7, **caractérisé en ce que** l'unité de traitement est programmée pour :

- effectuer une première comparaison :

- entre une vitesse, dite vitesse limite (Vlim), maximale autorisée sur ledit tronçon de voie, et
- la vitesse maximale théorique (VmtN),
- de façon à déterminer le minimum de ladite vitesse limite et de ladite vitesse maximale théorique,

- effectuer une deuxième comparaison entre la vitesse instantanée dudit véhicule et le résultat de la première comparaison.

**9.** - Dispositif selon l'une des revendications 1 à 8, **caractérisé en ce que** l'unité de traitement est programmée pour calculer une quantité d'énergie consommée par le véhicule sur un itinéraire prédéterminé comprenant au moins un tronçon de voie, avant le parcours dudit itinéraire par ledit véhicule.

**10.** - Dispositif selon l'une des revendications 1 à 9, **caractérisé en ce que** l'unité de traitement est programmée pour calculer un indice de confort sur un itinéraire prédéterminé comprenant au moins un tronçon de voie, avant le parcours dudit itinéraire par ledit véhicule.

**11.** - Dispositif selon l'une des revendications 1 à 10, **caractérisé en ce que** l'unité de traitement est programmée pour comparer la distance, dite distance de tronçon, séparant un premier obstacle (X1) d'un deuxième obstacle (X2) successifs à une distance, dite distance maximale de décélération, prédéterminée, puis, lorsque la distance de tronçon est inférieure à la distance maximale de décélération :

- déterminer une première position optimale de décélération (Xod1) pour le premier obstacle,
- déterminer une deuxième position optimale de décélération (Xod2) pour le deuxième obstacle,
- comparer la première position optimale de décélération (Xodl) et la deuxième position optimale de décélération (Xod2), puis, lorsque la première position optimale de décélération (Xod1) est située après la deuxième position optimale de décélération (Xod2), ignorer ledit premier obstacle (X1).

**12.** - Procédé d'assistance à la gestion de la consommation énergétique d'un véhicule, **caractérisé en ce qu'**il comprend au moins une étape dans laquelle une vitesse, dite vitesse maximale théorique (VmtN), est déterminée, ladite vitesse maximale théorique (VmtN) :

- correspondant à une vitesse maximale pouvant être théoriquement atteinte par le véhicule:

  - en appliquant un profil d'accélération, dit profil d'accélération nominale (N), comprenant au moins une valeur d'accélération, dite accélération nominale, positive selon une direction de déplacement principale dudit véhicule,
  - tout en respectant un profil de décélération optimale (C) prédéterminé pour atteindre une position, dite position cible (Xc), d'un obstacle sur ledit tronçon de voie, avec une vitesse, dite vitesse cible (Vc),

- étant déterminée au moins à partir de :

  - de ladite position cible (Xc),
  - de ladite vitesse cible (Vc),
  - du profil de décélération optimale (C),
  - du profil d'accélération nominale (N).

**13.** - Procédé selon la revendication 12, **caractérisé en ce qu'**il comprend au moins une étape dans laquelle une position, dite position optimale de décélération (Xodc), est déterminée, ladite position optimale de décélération :

- étant située sur un tronçon de voie,
- correspondant à une position à partir de laquelle la consommation d'énergie dudit véhicule peut être optimisée en mettant en œuvre le profil de décélération optimale (C),
- est déterminée au moins à partir :

  - de ladite position cible (Xc),
  - de ladite vitesse cible (Vc),
  - dudit profil de décélération optimale (C).

**14.** - Procédé selon la revendication 13, **caractérisé en ce que** la position optimale de décélération (Xodc) est en outre déterminée à partir du profil d'accélération nominale (N) du véhicule.

**15.** - Programme informatique comprenant des instructions pour l'exécution d'un procédé selon l'une des revendications 12 à 14 lorsque le programme est exécuté par un dispositif comprenant au moins une unité de traitement de données, notamment par un dispositif selon l'une des revendications 1 à 11.

**16.** - Véhicule comprenant un dispositif selon l'une des revendications 1 à 11.


**Patentansprüche**

**1.** Vorrichtung zur Unterstützung der Verwaltung des Energieverbrauchs eines Fahrzeugs, die mindestens umfasst:

- digitale Daten, die für mindestens einen Streckenabschnitt repräsentativ sind,
- digitale Daten, die für eine als Zielposition (Xc) bezeichnete Position eines Hindernisses auf dem Streckenabschnitt repräsentativ sind,
- digitale Daten, die für eine als Zielgeschwindigkeit (Vc) bezeichnete Geschwindigkeit des Fahrzeugs an der Zielposition repräsentativ sind,
- eine Verarbeitungseinheit für digitale Daten,
**dadurch gekennzeichnet, dass**:

-- sie weiter digitale Daten umfasst, die für mindestens ein vorbestimmtes, optimales Bremsprofil (C) des Fahrzeugs, um die Zielposition (Xc) mit der Zielgeschwindigkeit (Vc) zu erreichen, repräsentativ sind,
-- sie weiter digitale Daten umfasst, die für mindestens ein als Nennbeschleunigungsprofil (N) bezeichnetes, mindestens einen als Nennbeschleunigung bezeichneten, positiven Beschleunigungswert in einer Hauptfahrtrichtung des Fahrzeugs umfassendes Beschleunigungsprofil des Fahrzeugs repräsentativ sind,
-- die Verarbeitungseinheit so programmiert ist, dass sie Daten, die für eine als theoretische maximale Geschwindigkeit (VmtN) bezeichnete, maximale Geschwindigkeit, die vom Fahrzeug unter Anwendung des Nennbeschleunigungsprofils (N) unter gleichzeitiger Beachtung des optimalen Bremsprofils (C) theoretisch erreicht werden kann, um die Zielposition mit der Zielgeschwindigkeit zu erreichen, repräsentativ sind, in Abhängigkeit von mindestens:

--- der Zielposition (Xc),
--- der Zielgeschwindigkeit (Vc),
--- dem optimalen Bremsprofil (C),
--- dem Nennbeschleunigungsprofil (N)
erzeugt.

2. Vorrichtung nach Anspruch 1, **dadurch gekennzeichnet, dass** die Verarbeitungseinheit so programmiert ist, dass sie mindestens in Abhängigkeit vom optimalen Bremsprofil (C), der Zielposition (Xc) und der Zielgeschwindigkeit (Vc) digitale Daten erzeugt, die für eine auf dem Streckenabschnitt liegende und einer Position, ab der der Energieverbrauch des Fahrzeugs unter Umsetzung des optimalen Bremsprofils (C) optimiert werden kann, entsprechende, als optimale Bremsposition (Xodc) bezeichnete Position repräsentativ sind.

3. Vorrichtung nach einem der Ansprüche 1 oder 2, **dadurch gekennzeichnet, dass** sie weiter eine Positionsvorrichtung umfasst, die in der Lage ist, als Positionsdaten bezeichnete digitale Daten zu liefern, die für die momentane Position des Fahrzeugs repräsentativ sind.

4. Vorrichtung nach Anspruch 3, **dadurch gekennzeichnet, dass** die Verarbeitungseinheit so programmiert ist, dass sie einen Vergleich zwischen der momentanen Position des Fahrzeugs und der optimalen Bremsposition (Xodc) vornimmt.

5. Vorrichtung nach einem der Ansprüche 1 bis 4, **dadurch gekennzeichnet, dass** sie weiter eine Beschleunigungsmessvorrichtung umfasst, die in der Lage ist, eine momentane Beschleunigung des Fahrzeugs mindestens in einer Hauptfahrtrichtung des Fahrzeugs zu messen und als Beschleunigungsdaten bezeichnete digitale Daten zu liefern, die für diese momentane Beschleunigung repräsentativ sind.

6. Vorrichtung nach den Ansprüchen 4 und 5, **dadurch gekennzeichnet, dass** die Verarbeitungseinheit so programmiert ist, dass sie, wenn die momentane Position des Fahrzeugs auf dem Streckenabschnitt zwischen der optimalen Bremsposition (Xodc) und der Zielposition (Xc) liegt, einen Vergleich zwischen der momentanen Beschleunigung des Fahrzeugs und dem optimalen Bremsprofil (C) vornimmt.

7. Vorrichtung nach einem der Ansprüche 1 bis 6, **dadurch gekennzeichnet, dass** sie weiter eine Geschwindigkeitsmessvorrichtung umfasst, die geeignet ist, digitale Daten zu erzeugen, die für die momentane Geschwindigkeit des Fahrzeugs repräsentativ sind.

8. Vorrichtung nach einem der Ansprüche 1 bis 7, **dadurch gekennzeichnet, dass** die Verarbeitungseinheit so programmiert ist, dass sie:

- einen ersten Vergleich vornimmt:

-- zwischen einer als Grenzgeschwindigkeit (Vlim) bezeichneten, maximal zulässigen Geschwindigkeit auf dem Streckenabschnitt, und

-- der theoretischen maximalen Geschwindigkeit (VmtN),

-- um das Minimum aus der Grenzgeschwindigkeit und der theoretischen maximalen Geschwindigkeit zu bestimmen,

- einen zweiten Vergleich zwischen der momentanen Geschwindigkeit des Fahrzeugs und dem Ergebnis des ersten Vergleichs vornimmt.

9. Vorrichtung nach einem der Ansprüche 1 bis 8, **dadurch gekennzeichnet, dass** die Verarbeitungseinheit so programmiert ist, dass sie eine vom Fahrzeug auf einer vorbestimmten Route, die mindestens einen Streckenabschnitt umfasst, verbrauchte Energiemenge berechnet, bevor das Fahrzeug die Route befährt.

10. Vorrichtung nach einem der Ansprüche 1 bis 9, **dadurch gekennzeichnet, dass** die Verarbeitungseinheit so programmiert ist, dass sie einen Komfortindex auf einer vorbestimmten Route, die mindestens einen Streckenabschnitt umfasst, berechnet, bevor das Fahrzeug die Route befährt.

11. Vorrichtung nach einem der Ansprüche 1 bis 10, **dadurch gekennzeichnet, dass** die Verarbeitungseinheit so programmiert ist, dass sie die als Abschnittsentfernung bezeichnete Entfernung, die ein erstes Hindernis (X1) von einem folgenden, zweiten Hindernis (X2) trennt, mit einer als maximale Bremsentfernung bezeichneten, vorbestimmten Entfernung vergleicht und anschließend, wenn die Abschnittsentfernung kleiner ist als die maximale Bremsentfernung:

- eine erste optimale Bremsposition (Xod1) für das erste Hindernis bestimmt,
- eine zweite optimale Bremsposition (Xod2) für das zweite Hindernis bestimmt,
- die erste optimale Bremsposition (Xod1) und die zweite optimale Bremsposition (Xod2) vergleicht und anschließend, wenn die erste optimale Bremsposition (Xod1) hinter der zweiten optimalen Bremsposition (Xod2) liegt, das erste Hindernis (X1) ignoriert.

12. Verfahren zur Unterstützung der Verwaltung des Energieverbrauchs eines Fahrzeugs, **dadurch gekennzeichnet, dass** es mindestens einen Schritt umfasst, bei dem eine als theoretische maximale Geschwindigkeit (VmtN) bezeichnete Geschwindigkeit bestimmt wird, wobei die theoretische maximale Geschwindigkeit (VmtN):

- einer maximalen Geschwindigkeit entspricht, die vom Fahrzeug:

-- unter Anwendung eines als Nennbeschleunigungprofil (N) bezeichneten, mindestens einen als Nennbeschleunigung bezeichneten, positiven Beschleunigungswert in einer Hauptfahrtrichtung des Fahrzeugs umfassenden Beschleunigungsprofils,
-- unter gleichzeitiger Beachtung eines vorbestimmten, optimalen Bremsprofils (C), um eine als Zielposition (Xc) bezeichnete Position eines Hindernisses auf dem Streckenabschnitt mit einer als Zielgeschwindigkeit (Vc) bezeichneten Geschwindigkeit zu erreichen,
theoretisch erreicht werden kann,

- mindestens auf Grundlage:

-- der Zielposition (Xc),
-- der Zielgeschwindigkeit (Vc),
-- des optimalen Bremsprofils (C),
-- des Nennbeschleunigungsprofils (N),
bestimmt wird.

13. Verfahren nach Anspruch 12, **dadurch gekennzeichnet, dass** es mindestens einen Schritt umfasst, bei dem eine als optimale Bremsposition (Xodc) bezeichnete Position bestimmt wird, wobei die optimale Bremsposition:

- auf einem Streckenabschnitt liegt,
- einer Position entspricht, ab der der Energieverbrauch des Fahrzeugs unter Umsetzung des optimalen Bremsprofils (C) optimiert werden kann,
- mindestens auf Grundlage:

-- der Zielposition (Xc),

-- der Zielgeschwindigkeit (Vc),
-- des optimalen Bremsprofils (C)
bestimmt wird.

**14.** Verfahren nach Anspruch 13, **dadurch gekennzeichnet, dass** die optimale Bremsposition (Xodc) weiter auf Grundlage des Nennbeschleunigungsprofils (N) des Fahrzeugs bestimmt wird.

**15.** Informatikprogramm, das Anweisungen umfasst für die Ausführung eines Verfahrens nach einem der Ansprüche 12 bis 14, wenn das Programm von einer Vorrichtung, die mindestens eine Datenverarbeitungseinheit umfasst, insbesondere von einer Vorrichtung nach einem der Ansprüche 1 bis 11, ausgeführt wird.

**16.** Fahrzeug, das eine Vorrichtung nach einem der Ansprüche 1 bis 11 umfasst.

**Claims**

**1.** A device for assisting in the management of energy consumption of a vehicle, comprising at least:

   - digital data representative of at least one lane section,
   - digital data representative of a position, called target position (Xc), of an obstacle on said lane section,
   - digital data representative of a speed, called target speed (Vc), of the vehicle at the target position,
   - a digital data processing unit,

   **characterized in that**:

   - it further comprises digital data representative of at least one optimal deceleration profile (C) of said vehicle, predetermined so as to reach the target position (Xc) with the target speed (Vc),
   - it further comprises digital data representative of at least one acceleration profile, called nominal acceleration profile (N), of the vehicle, comprising at least one positive acceleration value, called nominal acceleration, according to a main direction of travel of said vehicle,
   - the processing unit is programmed to produce data representative of a maximum speed, called maximum theoretical speed (VmtN), that can theoretically be reached by the vehicle by applying the nominal acceleration profile (N) while complying with said optimal deceleration profile (C) so as to reach the target position at the target speed, at least according to:

      ▪ said target position (Xc),
      ▪ said target speed (Vc),
      ▪ the optimal deceleration profile (C),
      ▪ the nominal acceleration profile (N).

**2.** The device according to claim 1, **characterized in that** the processing unit is programmed to produce, at least according to said optimal deceleration profile (C), said target position (Xc) and said target speed (Vc), digital data representative of a position, called optimal deceleration position (Xodc), located on the lane section and corresponding to a position from which the energy consumption of said vehicle can be optimized by implementing said optimal deceleration profile (C).

**3.** The device according to any of claims 1 or 2, **characterized in that** it further comprises a positioning device able to provide digital data, called positioning data, representative of the instantaneous position of the vehicle.

**4.** The device according to claim 3, **characterized in that** the processing unit is programmed to perform a comparison between the instantaneous position of the vehicle and said optimal deceleration position (Xodc).

**5.** The device according to any of claims 1 to 4, **characterized in that** it further comprises an accelerometric device able to measure an instantaneous acceleration of the vehicle at least according to a main direction of travel of said vehicle, and to provide digital data, called acceleration data, representative of this instantaneous acceleration.

**6.** The device according to claims 4 and 5, **characterized in that** the processing unit is programmed, when said instantaneous position of the vehicle is located on the lane section between the optimal deceleration position (Xodc) and the target position (Xc), to perform a comparison between the instantaneous acceleration of the vehicle and said optimal deceleration profile (C).

7. The device according to any of claims 1 to 6, **characterized in that** it further comprises a speed measuring device adapted to produce digital data representative of the instantaneous speed of the vehicle.

8. The device according to any of claims 1 to 7, **characterized in that** the processing unit is programmed to:

   - perform a first comparison:

     - between a maximum speed, called limit speed (Vlim), authorized on said lane section, and
     - the theoretical maximum speed (VmtN),
     - so as to determine the minimum of said limit speed and of said theoretical maximum speed,

   - perform a second comparison between the instantaneous speed of said vehicle and the result of the first comparison.

9. The device according to any of claims 1 to 8, **characterized in that** the processing unit is programmed to calculate an amount of energy consumed by the vehicle on a predetermined route comprising at least one lane section, before said vehicle covers said route.

10. The device according to any of claims 1 to 9, **characterized in that** the processing unit is programmed to calculate a comfort index on a predetermined route comprising at least one lane section, before said vehicle covers said route.

11. The device according to any of claims 1 to 10, **characterized in that** the processing unit is programmed to compare the distance, called section distance, separating a first obstacle (X1) from a second obstacle (X2) which are successive, with a predetermined distance, called maximum deceleration distance, then, when the section distance is shorter than the maximum deceleration distance:

    - to determine a first optimal deceleration position (Xod1) for the first obstacle,
    - to determine a second optimal deceleration position (Xod2) for the second obstacle,
    - to compare the first optimal deceleration position (Xod1) and the second optimal deceleration position (Xod2), then, when the first optimal deceleration position (Xod1) is located after the second optimal deceleration position (Xod2), to ignore said first obstacle (X1).

12. A method for assisting in the management of the energy consumption of a vehicle, **characterized in that** it comprises at least one step in which a speed, called theoretical maximum speed (VmtN), is determined, said theoretical maximum speed (VmtN):

    - corresponding to a maximum speed that can theoretically be reached by the vehicle:

      - by applying an acceleration profile, called nominal acceleration profile (N), comprising at least one positive acceleration value, called nominal acceleration, according to a main direction of travel of said vehicle,
      - while complying with an optimal deceleration profile (C) predetermined so as to reach a position, called target position (Xc), of an obstacle on said lane section, with a speed, called target speed (Vc),

    - being determined at least from:

      - said target position (Xc),
      - said target speed (Vc),
      - the optimal deceleration profile (C),
      - the nominal acceleration profile (N).

13. The method according to claim 12, **characterized in that** it comprises at least one step in which a position, called optimal deceleration position (Xodc), is determined, said optimal deceleration position:

    - being located on a lane section,
    - corresponding to a position from which the energy consumption of said vehicle can be optimized by implementing the optimal deceleration profile (C),
- is determined at least from:

- said target position (Xc),
- said target speed (Vc),
- said optimal deceleration profile (C).

**14.** The method according to claim 13, **characterized in that** the optimal deceleration position (Xodc) is further determined from the nominal acceleration profile (N) of the vehicle.

**15.** A computer program comprising instructions for the execution of a method according to any of claims 12 to 14 when the program is executed by a device comprising at least one data processing unit, in particular by a device according to any of claims 1 to 11.

**16.** A vehicle comprising a device according to any of claims 1 to 11.

## Fig 1

## Fig 2

## Fig 3

Fig 4

Fig 5

**RÉFÉRENCES CITÉES DANS LA DESCRIPTION**

**Documents brevets cités dans la description**

- FR 2952337
- EP 2476597 A
- DE 10210054077
- DE 10212210317
- GB 2452579 A
- EP 1923291 A
- WO 2009106852 A